# EUROPÄISCHE PATENTSCHRIFT

(11) **EP 0 782 350 B1**
(45) Veröffentlichungstag und Bekanntmachung des Hinweises auf die Patenterteilung: **31.08.2005**
(21) Anmeldenummer: 96119028.7
(22) Anmeldetag: 27.11.1996
(51) Int. Cl.: H04Q 3/545, H04M 3/42

(54) **Verfahren zum Aktivieren und Ausführen von gesicherten Funktionen in einem Kommunikationssystem**
Method for activating and executing secured functions in a communication system
Procédé pour activer et exécuter des fonctions sécurisées dans un système de communication

(30) Priorität: 28.12.1995 DE 19549014
(43) Veröffentlichungstag der Anmeldung: 02.07.1997
(73) Patentinhaber: SIEMENS AKTIENGESELLSCHAFT, 80333 München (DE)
(72) Erfinder: Lukas, Günter, Ing., 1150 Wien (AT); Ramberger, Friedrich, Ing., 2332 Hennersdorf (AT); Giese, Peter, Ing., 85604 Zorneding (DE); Spahl, Siegfried, Ing., 82178 Puchheim (DE)

(56) Entgegenhaltungen:
- DE-A- 4 306 054
- US-A- 5 247 577
- SENECHAL J M: "OSIRIS MILITARY INFRASTRUCTURE SWITCH" ELECTRICAL COMMUNICATION, Bd. 65, Nr. 3, 1. Mai 1992 (1992-05-01), Seiten 226-231, XP000304883 ROMFORD, GB ISSN: 0013-4252
- TAKUMI K: "BASE TECHNOLOGIES FOR C&C INTEGRATIONS" NEC RESEARCH AND DEVELOPMENT, Nr. 96, 1. März 1990 (1990-03-01), Seiten 57-82, XP000136296 TOKYO, JP ISSN: 0547-051X

## Beschreibung

Die Erfindung betrifft ein Verfahren zum Aktivieren von gesicherten Funktionen in einem Kommunikationssystem durch eine an das Kommunikationssystem angeschlossene periphere Einrichtung. Ein derartiges Verfahren ist aus der DE-A-4306054 bekannt.

Für eine komfortable Vermittlung von an Kommunikationssysteme eines Kommunikationsnetzes ankommenden Anrufen für angeschlossene Kommunikationsendgeräte und für die Aktivierung von Leistungsmerkmalen sind an die Kommunikationssysteme angeschlossene periphere Einrichtungen, z.B. Server, vorgesehen. Den Kommunikationsaustausch zwischen dem Kommunikationssystem und der peripheren Einrichtung steuert beispielsweise eine in beiden Einrichtungen realisierte ACL-Schnittstelle (Application Connectivity Link). Im Kommunikationssystem weist eine zentrale Steuerung eine Programmstruktur auf, mit deren Hilfe sowohl die vermittlungstechnischen Ereignisse der ankommenden Anrufe durch Ereignismeldungen an die periphere Einrichtung gemeldet als auch von dieser über die ACL-Schnittstelle übermittelte vermittlungstechnische und betriebstechnische Anweisungen zur Ausführung gebracht werden. Die vermittlungstechnischen und betriebstechnischen Anweisungen initialisieren und steuern die Funktionen und Leistungsmerkmale in einem Kommunikationssystem.

Des weiteren weisen Kommunikationssysteme Funktionen und Leistungsmerkmale auf, deren Aktivierung und Ausführung nur durch autorisierte Personen erfolgen darf, z.B. Aufschalten auf bestehende Kommunikationsverbindungen oder Mitschneiden, d.h. Aufzeichnen von über eine Kommunikationsverbindung übermittelten Informationen. Die Aktivierung und Steuerung der Ausführung erfolgt hierbei über die ACL-Schnittstelle durch die periphere Einrichtung.

Die der Erfindung zugrundeliegende Aufgabe besteht darin, eine nicht autorisierte Aktivierung und Ausführung von bestimmten Funktionen bzw. Leistungsmerkmalen eines Kommunikationssystems über die ACL-Schnittstelle durch die periphere Einrichtung zu verhindern. Die Aufgabe wird ausgehend von einem Verfahren zum Aktivieren von gesicherten Funktionen in einem Kommunikationssystem gemäß den Merkmalen des Oberbegriffs des Patentanspruchs 1 durch dessen kennzeichnende Merkmale gelöst.

Der wesentliche Aspekt des erfindungsgemäßen Verfahrens ist darin zu sehen, daß in einer zusätzlichen, dem Kommunikationssystem zugeordneten Schlüsseleinheit funktionsabhängige Schlüsselalgorithmen gespeichert sind und im Kommunikationssystem eine gesicherte Funktion und eine Sicherungsroutine durch eine von der peripheren Einrichtung übermittelte betriebstechnische Anweisung aktiviert wird. Von der aktivierten Sicherungsroutine werden zumindest temporär, vorteilhaft periodisch - Anspruch 5 -, funktionsindividuell verschlüsselte Abfrageinformationen an die Schlüsseleinheit übermittelt und die gesicherte Funktion wird eingeleitet oder weiter ausgeführt, sofern in der Sicherungsroutine innerhalb einer nach jedem Aussenden der Abfrageinformation vorgegebenen Zeitspanne von der Schlüsseleinheit eine funktionsspezifisch zusätzlich verschlüsselte Antwortinformation empfangen wird. Durch dieses zumindest temporäre, vorteilhaft periodische Aussenden von verschlüsselten Abfrageinformationen und dem Empfangen einer zusätzlich verschlüsselten Antwortinformation innerhalb einer vorgegebenen Zeitspanne nach dem Aussenden einer Abfrageinformation wird sichergestellt, daß eine gesicherte Funktion bzw. ein gesichertes Leistungsmerkmal nur von autorisierten peripheren Einrichtungen bzw. autorisierten Personen aktiviert und ausgeführt werden kann. Die eine gesicherte Funktion aktivierende betriebstechnische Anweisung wird in einer in der peripheren Einrichtung implementierten gesicherten Applikation gebildet - ist dort gespeichert und wird abgerufen - oder wird an einer Eingabeeinrichtung der peripheren Einrichtung eingegeben - Anspruch 2.

Bei einem mit der Aktivierung verbundenen Einrichten der gesicherten Funktion umfaßt die betriebstechnische Anweisung vorteilhaft zusätzlich betriebstechnische Informationen, durch die im Kommunikationssystem programmtechnisch realisierte Teilfunktionen im Sinne eines Einrichtens der gesicherten Funktion programmtechnisch verknüpft werden - Anspruch 3. Hierbei wird die gesicherte Funktion bzw. das gesicherte Leistungsmerkmal erst im Falle seiner Aktivierung durch die programmtechnische Verknüpfung von bereits im Kommunikationssystem vorhandenen Teilfunktionen eingerichtet, d.h. die gesicherte Funktion bzw. das gesicherte Leistungsmerkmal kann vor diesem gesicherten Einrichten nicht benutzt werden. Hierdurch wird eine weitere Sicherung von Funktionen bzw. Leistungsmerkmalen erreicht, die durch Unbefugte nicht benutzt werden dürfen.

Die vorgegebene Zeitspanne ist auf die Verarbeitungs- und Übermittlungszeiten des Kommunikationssystems, der peripheren Einrichtung und der Schlüsseleinheit abzustimmen - Anspruch 6. Die vorgegebene Zeitspanne darf einerseits nicht kürzer sein als die Summe aller Verarbeitungs- und Übermittlungszeiten für das Übermitteln der Abfrageinformation und das Bilden und Übermitteln der Antwortinformation und andererseits soll sie eine ausgewählte, maximale Zeitspanne nicht überschreiten.

Gemäß einer weiteren vorteilhaften Ausgestaltung sind in der Schlüsseleinheit die der Ermittlung der funktionsspezifischen Schlüssel und die die Bildung der Antwortinformationen realisierenden Schlüsselprogramme nur durch einen schaltungstechnischen Programmablaufschutz aktivierbar - Anspruch 8. Der schaltungstechnische Programmablaufschutz ist vorteilhaft an eine Schnittstelle der Schlüsseleinheit eingesteckt und bewirkt durch eine mit der Schnittstelle verbundene Schnittstellenroutine die Aktivierung der Schlüsselprogramme - Anspruch 8,9. Dieser schaltungstechnische Programmablaufschutz - in der Fachwelt als Hardware-Dongle bekannt - erhöht zusätzlich die Sicherheit hinsichtlich der unbefugten Benutzung von bestimmten Funktionen bzw. Leistungsmerkmalen.

Die periphere Einrichtung ist vorteilhaft über eine ACL-Schnittstelle mit dem Kommunikationssystem verbunden - Anspruch 10 - und die Schlüsseleinheit ist vorteilhaft in die periphere Einrichtung integriert - Anspruch 11. Die Schlüsseleinheit ist beispielsweise in der peripheren Einrichtung - vorteilhaft durch einen Personalcomputer realisiert - integriert, wobei für das Einstecken des schaltungstechnischen Programmablaufschutzes eine der vorhandenen Schnittstellen des Personalcomputers benutzt werden kann.

Im folgenden wird das erfindungsgemäße Verfahren anhand eines Blockschaltbildes näher erläutert. Das Blockschaltbild zeigt ein Kommunikationssystem KS, an das Kommunikationsendgeräte KE angeschlossen sind. Beispielhaft sind zwei Kommunikationsendgeräte KE dargestellt, die über ein im Kommunikationssystem KS angeordnetes Koppelfeld KF verbunden sind - durch strichlierte Linien im Koppelfeld KF angedeutet. Die Verbindung zwischen den gezeigten Kommunikationsendgeräten KE ist entsprechend einem Signalisierungsverfahren, beispielsweise ISDN-Signalisierungsverfahren, mit Hilfe einer überwiegend programmtechnisch realisierten, zentralen Steuerung ST aufgebaut.

Das Kommunikationssystem umfaßt eine sie vermittlungstechnisch steuernde und koordinierende zentrale Steuereinrichtung ST sowie eine eine ACL-Schnittstelle (Application Connectivity Link) realisierende ACL-Routine ACLR. Das Koppelfeld KF und die ACL-Routine ACLR sind jeweils mit der zentralen Steuerung ST verbunden. Die ACL-Schnittstelle der ACL-Routine ACLR ist jeweils mit einer gleichartig realisierten ACL-Schnittstelle ACL eines Personalcomputers PC und einer Schlüsseleinheit SE verbunden. Der Personalcomputer PC repräsentiert eine periphere Einrichtung des Kommunikationssystems KS, in der Applikationsprogramme APP für die Steuerung von zusätzlichen Funktionen und Leistungsmerkmalen des Kommunikationssystems, z.B. ACD (Automatic Call Distribution)- Funktionen - gespeichert sind. Die im Kommunikationssystem KS realisierten Funktionen und Leistungsmerkmale werden von den jeweiligen Applikationsprogrammen APP durch vermittlungstechnische bzw. betriebstechnische Anweisungen amo aktiviert bzw. deren Ausführung eingeleitet. Für die Anzeige von vermittlungstechnischen Ereignissen und von über die Verbindung übermittelten Informationen sp ist in der zentralen Steuerung ST eine Programmstruktur - nicht dargestelltes Monitoring-Programm - vorgesehen, durch die alle vermittlungstechnischen Ereignisse und ggfs. übermittelte Informationen sp erfaßt und an den Personalcomputer PC übermittelt werden.

Für das Ausführungsbeispiel sei angenommen, daß durch ein Applikationsprogramm SAPP eine gesicherte Funktion FAA, im Ausführungsbeispiel Aufschalten auf die Verbindung zwischen den beiden Kommunikationsendgeräten KE und Aufzeichnen der übermittelten Informationen sp, aktiviert und zur Ausführung gebracht werden soll. Hierzu wird von dem Applikationsprogramm SAPP eine betriebstechnische Anweisung amo mit einer die zu aktivierende gesicherte Funktion FAA anzeigende Information faa über die ACL-Schnittstelle ACL an die zentrale Steuerung ST übermittelt, wodurch in dieser ein Einrichten einer Aufzeichnungsroutine RER veranlaßt wird. Die Aufzeichnungsroutine RER wird in der zentralen Steuerung ST entsprechend den in der betriebstechnischen Anweisung amo zusätzlich übermittelten Angaben über Teilfunktionen tf1...n und Verknüpfungsinformationen v1...n eingerichtet. Durch diese zusätzlichen Informationen tf1...n, v1...n werden die im Kommunikationssystem KS bereits implementierten Teilfunktionen sowie deren Verknüpfung untereinander angegeben. Vorteilhaft können diese Informationen tf1...n, v1...n in der betriebstechnischen Anweisung amo in einer Tabelle angezeigt werden.

Nach dem Einrichten der Aufzeichnungsroutine RER wird eine Startinformation si an eine in der zentralen Steuereinheit ST realisierte Sicherungsroutine SIS übermittelt. In dieser Sicherungsroutine SIS werden in Abhängigkeit von der zu aktivierenden Funktion bzw. dem Leistungsmerkmal verschlüsselte Abfrageinformationen afi gebildet. Hierbei ist für jede zu sichernde Funktion bzw. jedes zu sichernde Leistungsmerkmal jeweils ein separater Schlüssel hinterlegt - nicht dargestellt. Bezogen auf das Ausführungsbeispiel wird für die Aufzeichnungsroutine RER, die das Leistungsmerkmal FAA Aufschalten und Aufzeichnen realisiert, der in der Sicherungsroutine SIS gespeicherte, für das Leistungsmerkmal Aufschalten und Mitschneiden vorgesehene Schlüssel SRER benutzt. Die mit dem funktionsindividuellen Schlüssel SRER verschlüsselte Abfrageinformation afi wird über die ACL-Schnittstelle ACL an das in der Schlüsseleinheit SE realisierte Schlüsselmodul SM übermittelt. In diesem Schlüsselmodul SM wird die übermittelte Abfrageinformation afi erneut mit einem funktionsspezifischen Schlüssel ARER verschlüsselt und als Antwortinformation ai an die Sicherungsroutine SIS zurückgesandt. Der funktionsspezifische Schlüssel ARER ist für die jeweiligen zu sichernden Funktionen bzw. Leistungsmerkmale unterschiedlich und wird durch einen schaltungstechnischen Ablaufschutz DONGLE in die Schlüsseleinheit SE eingebracht. Dieses Eingeben erfolgt durch Stecken des schaltungstechnischen Programmablaufschutzes DONGLE an eine Schnittstelle SST der Schnittstelleneinheit SE. Die durch eine Schnittstellenroutine SSR realisierte Schnittstelle SST ist mit dem Schlüsselmodul SM verbunden. Mit Hilfe der Schnittstellenroutine SSR wird bei jeder ankommenden Abfrageinformation afi der Schlüssel ARER aus dem schaltungstechnischen Programmablaufschutz DONGLE abgefragt und an das Schlüsselmodul SM übergeben. Mit diesem funktionsspezifischen Schlüssel ARER wird die übermittelte Abfrageinformation afi erneut verschlüsselt und als Antwortinformation ai an die Sicherungsroutine SIS zurückgesandt. Ist der schaltungstechnische Programmablaufschutz DONGLE nicht gesteckt oder wird er entfernt, ist eine erstmalige oder weitere Verschlüsselung der empfangenen Abfrageinformationen afi nicht mehr möglich. Die Abfrageinformationen afi werden somit unverschlüsselt - für das Ausführungsbeispiel im weiteren angenommen - oder alternativ nicht mehr zurückgesandt.

In der Sicherungsroutine SIS des Kommunikationssystems KS wird die übermittelte Antwortinformation ai dahingehend überprüft, ob die abgesandte Abfrageinformation afi korrekt, d.h. mit dem entsprechenden funktionsspezifischen Schlüssel ARER - im Ausführungsbeispiel für das Leistungsmerkmal FAA Aufschalten und Aufzeichnen - verschlüsselt ist. Bei korrekt übermittelter Antwortinformation ai wird eine Bestätigungsinformation bi gebildet und an die eingerichtete Aufzeichnungsroutine RER übermittelt. Aufgrund der empfangenen Bestätigungsinformation bi wird durch die Aufzeichnungsroutine RER ein Einstellbefehl eb gebildet und an das Koppelfeld KF übermittelt. Das Koppelfeld bewirkt das Aufschalten eines zusätzlichen Teilnehmeranschlussses A an die bereits bestehende Verbindung V zwischen den Kommunikationsendgeräten KE - durch strichlierte Linien angedeutet. An diesen zusätzlichen Teilnehmeranschluß A ist beispielsweise eine Aufzeichnungseinrichtung REC angeschlossen, die bei Vorliegen von Informationen sp diese automatisch aufzeichnet. Alternativ ist die Aufzeichnungseinrichtung REC an eine Schnittstelle SC des Personalcomputers PC angeschlossen. Hierbei werden die zwischen den beiden Kommunikationsendgeräten KE übermittelten Informationen sp über die Aufzeichnungsroutine RER und die ACL-Schnittstelle ACL sowie das betreffende Applikationsprogramm SAPP und über die Schnittstelle SC an die Aufzeichnungseinrichtung REC übermittelt. Die Aufzeichnungseinrichtung REC kann alternativ in den Personalcomputer PC integriert werden - durch gestrichelte Linien angedeutet -, wobei vorhandenen Speichereinrichtungen des Personalcomputers PC mitbenutzt werden können

Insbesondere bei einer Aufzeichnung der übermittelten Informationen sp beim Personalcomputer PC muß ein unerlaubter bzw. unautorisierter Zugriff auf die ACL-Schnittstelle ACL während der Aufzeichnung, d.h. während des Betriebes, vermieden werden. Hierzu wird von der Sicherungsroutine SIS periodisch, d.h. in vorgegebenen Zeitabständen von beispielsweise fünf Sekunden eine Abfrageinformation afi gebildet und ausgesandt und in einer vorgegebenen Zeitspanne, beispielsweise 3 Sekunden, eine korrrekt verschlüsselte Antwortinformation ai erwartet. Bleibt diese zusätzlich verschlüsselte Antwortinformation ai aus, wird der Aufzeichnungsvorgang sofort unterbrochen und die eingerichtete Aufzeichnungsroutine RER gelöscht. Die Periodendauer, d.h. die Zeitdauer zwischen dem jeweiligen Senden von Abfrageinformationen afi und die Antwortdauer, d.h. die Dauer, in der eine zusätzlich verschlüsselte Antwortinformation ai nach dem Aussenden einer Abfrageinformation afi empfangen werden muß, ist auf die jeweiligen Verarbeitungs- und Übermittlungszeiten im Kommunikationssystem KS, der Schlüsseleinheit SE sowie den Verbindungsleitungen zwischen den ACL-Schnittstellen ACL abzustimmen.

Die betriebstechnische Anweisung amo für das Aktivieren und Einrichten einer gesicherten Funktion bzw. eines gesicherten Leistungsmerkmals ist alternativ durch eine Eingabeeinrichtung EE, z.B. einer Tastatur, des Personalcomputers PC zu bilden und wird anschließend über die ACL-Schnittstelle ACL an das Kommunikationssystem übermittelt. Sowohl durch die spezielle, d.h. benutzerspezifische Eingabe an der Eingabeeinrichtung EE des Personalcomputers PC als auch durch den schaltungstechnischen Programmablaufschutz DONGLE wird eine erhebliche Sicherheit gegen unerlaubtes Aktivieren von gesicherten Funktionen bzw. Leistungsmerkmalen erreicht.

Zusätzliche Sicherheit wird dadurch erreicht, daß die Schlüsseleinheit SC durch eine autorisierte Person kurz vor einem Aktivieren und Ausführen von gesicherten Funktionen bzw. Leistungsmerkmalen an die ACL-Schnittstelle ACL angeschlossen, d.h. beispielsweise angesteckt wird. Dieses Anschließen der Schlüsseleinheit SE kann auch an einer Anschlußeinheit, beispielsweise einer vorhandene Steckeinrichtung des Personalcomputers, erfolgen, wobei dieses Anschließen im Personalcomputer PC eine Integration einer zusätzlichen SCL-Schnittstelle ACL voraussetzt. Die Schlüsseleinheit SE kann auch fest zwischen die beiden ACL-Schnittstellen ACL des Personalcomputers PC und des Kommunikationssystems KS eingefügt sein, wobei die Sicherung beispielsweise durch einen steckbaren schaltungstechnischen Programmablaufschutz DONGLE erreicht wird.

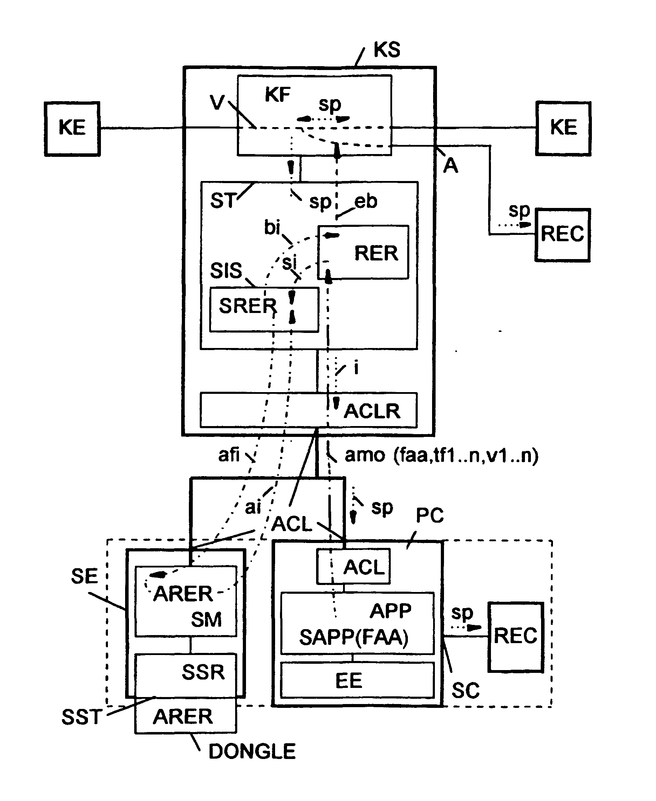

## Patentansprüche

1. Verfahren zum Aktivieren von gesicherten Funktionen (FAA) in einem Kommunikationssystem (KS) durch eine an das Kommunikationssystem (KS) angeschlossene periphere Einrichtung (PC), **dadurch gekennzeichet,**
- daß in einer zusätzlichen, dem Kommunikationssystem (KS) zugeordneten Schlüsseleinheit (SE) funktionsabhängige Schlüsselalgorythmen (SRER) vorgesehen sind,
- daß im Kommunikationssystem (KS) eine gesicherte Funktion (FAA) und eine Sicherungsroutine (SIS) durch zumindest eine von der peripheren Einrichtung (PC) übermittelte betriebstechnischen Anweisung (amo) aktiviert wird,
- daß von der aktivierten Sicherungsroutine (SIS) zumindest temporär funktionsindividuell verschlüsselte Abfrageinformationen (afi) an die Schlüsseleinheit (SE) übermittelt werden, und
- daß die gesicherte Funktion (FAA) eingeleitet oder weiter ausgeführt wird, sofern in der Sicherungsroutine (SIS) innerhalb einer nach jedem Aussenden der Abfrageinformation (afi) vorgegebenen Zeitspanne von der Schlüsseleinheit (SE) eine funktionsspezifisch zusätzlich verschlüsselte Antwortinformationen (ai) empfangen wird.

2. Verfahren nach Anspruch 1, **dadurch gekennzeichnet, daß** die zumindest eine betriebstechnische Anweisung (amo) in einer in der peripheren Einrichtung (PC) vorgesehenen, gesicherten Appikation (SAPP) oder in einer Eingabeeinrichtung (EE) der peripheren Einrichtung (PC) gebildet wird.

3. Verfahren nach Anspruch 1, **dadurch gekennzeichnet, daß** bei einem mit der Aktivierung verbundenen Einrichten der gesicherten Funktion (FAA) die betriebstechnische Anweisung (amo) zusätzlich betriebstechnische Informationen (tf1..n, v1..n) umfaßt, durch die im Kommunikationssystem (KS) programmtechnisch realisierten Teilfunktionen im Sinne eines Einrichtens der gesicherten Funktion (FAA) programmtechnisch verknüpft werden.

4. Verfahren nach Anspruch 3, **dadurch gekennzeichnet, daß** die durch die gesichterte Applikation (SAPP) gebildeten, zusätzlichen betriebstechnischen Informationen (tf1..n,v1..n) in einer Verknüpfungstabelle eingetragen sind, anhand derer die die angegebene gesicherte Funktion (FAA) realisierenden Teilfunktionen programmtechnisch verknüpft werden.

5. Verfahren nach einem der vorhergehenden Ansprüche, **dadurch gekennzeichnet, daß** die funktionsindividuell verschlüsselten Abfrageinformationen (afi) periodisch an die Schlüsseleinheit (SE) übermittelt werden.

6. Verfahren nach einem der vorhergehenden Ansprüche, **dadurch gekennzeichnet, daß** die vorgegebene Zeitspanne auf die Verarbeitungs- und Übermittlungszeiten des Kommunikationssystems (KS), der peripheren Einrichtung (PC) und der Schlüsseleinheit (SE) abgestimmt ist.

7. Verfahren nach einem der vorhergehenden Ansprüche, **dadurch gekennzeichnet, daß** die gesicherten Funktionen (FAA) durch gesicherte vermittlungstechnische Funktionen und durch gesicherte Leistungsmerkmale repräsentiert sind.

8. Verfahren nach einem der vorhergehenden Ansprüche, **dadurch gekennzeichnet, daß** in der Schlüsseleinheit (SE) die die Ermittlung der funktionsspezifischen Schlüssel (ARER) und die die Bildung der Antwortinformationen (ai) realisierenden Schlüsselprogramme (SM) durch einen schaltungstechnischen Programmablaufschutz (DONGLE) aktivierbar sind.

9. Verfahren nach Anpruch 6, **dadurch gekennzeichnet, daß** der schatungstechnische Progammablaufschutz (DONGLE) an eine Schnittstelle (SST) der Schlüsseleinheit (SE) gesteckt wird und daß durch eine mit der Schnittstelle (SST) verbundene Schnittstellenroutine (SSR) die Aktivierung der Schlüsselprogramme (SM) bewirkt wird.

10. Verfahren nach einem der vorhergehenden Ansprüche, **dadurch gekennzeichnet, daß** die periphere Einrichtung (PC) über eine ACL-Schnittstelle (ACL) mit dem Kommunikationssystem (KS) verbunden ist.

11. Verfahren nach einem der vorhergehenden Ansprüche, **dadurch gekennzeichnet, daß** die Schlüsseleinheit (SE) in die periphere Einrichtung (PC) integriert ist.

## Claims

1. Method for activating secure functions (FAA) in a communication system (KS) by a peripheral device (PC) connected to the communication system (KS), **characterised in that**
- function-dependent cryptographic algorithms (SRER) are provided in an additional cryptographic unit (SE) assigned to the communications system (KS),
- that in the communication system (KS) a secure function (FAA) and a secure routine (SIS) are activated by at least one operating instruction (amo) transmitted from the peripheral device (PC),
- that from the activated security routine SIS, at least temporary interrogation information (afi) encrypted individually for the function is transmitted to the cryptographic unit (SE), and
- that the secure function (FAA) is initiated or further executed provided function-specific additional encrypted answer information (ai) is received from the cryptographic unit (SE) within a specified time from the transmission of the interrogation information (afi).

2. Method in accordance with Claim 1, **characterised in that**, at least one operating instruction (amo) is formed in a secure application (SAPP) provided in the peripheral device (PC) or in an input device (EE) of the peripheral device (PC).

3. Method in accordance with Claim 1, **characterised in that** with the activation-associated setting up of the secure function (FAA) the operating instruction (amo) additionally contains operating information (tf1...n, v1...n), by means of which program part-functions realised in the communication system (KS) are linked by the program in the sense of setting up the secure functions (FAA).

4. Method in accordance with Claim 3, **characterised in that** the additional operating information (tf1...n, v1...n) formed by the secure application (SAPP) is entered in a logic table, on the basis of which the part-functions implementing the specified secure function (FAA) are linked by the program.

5. Method in accordance with one of the preceding claims, **characterised in that** the function-specific encrypted interrogation information (afi) is periodically transmitted to the cryptographic unit (SE).

6. Method in accordance with one of the preceding claims, **characterised in that** the specified time period is matched to the processing and transmitting times of the communication system (KS), of the peripheral device (PC) and of the cryptographic unit (SE).

7. Method in accordance with one of the preceding claims, **characterised in that** the secure functions (FAA) are represented by secure switching functions and by secure performance features.

8. Method in accordance with one of the preceding claims, **characterised** that in the cryptographic unit (SE) the cryptographic programs (SM) realising the determination of the function-specific codes (ARER) and the formation of the answer information (ai) can be activated by a program sequence protection circuit (DONGLE).

9. Method in accordance with claim 6, **characterised in that** the program sequence protection circuit (DONGLE) is plugged in to an interface (SST) of the cryptographic unit (SE) and that the activation of the cryptographic programs (SM) is effected by an interface routine (SSR) connected to the interface (SST).

10. Method in accordance with one of the preceding claims, **characterised in that** the peripheral device (PC) is connected to the communication system (KS) via an ACL interface ACL.

11. Method in accordance with one of the preceding claims, **characterised in that** the cryptographic unit (SE) is integrated into the peripheral device (PC).

## Revendications

1. Procédé pour l'activation de fonctions sécurisées (FAA) dans un système de communication (KS) grâce à un dispositif périphérique (PC) connecté au système de communication (KS),
**caractérisé**
- **en ce que** des algorithmes de clé (SRER) dépendants des fonctions sont prévus dans une unité de chiffrage (SE) supplémentaire associée au système de communication (KS),
- **en ce qu'**une fonction sécurisée (FAA) et une routine de sécurité (SIS) sont activées dans le système de communication (KS) par au moins une instruction d'exploitation (amo) transmise par le dispositif périphérique (PC),
- **en ce que** des informations de requête (afi) chiffrées individuelles pour chaque fonction sont envoyées à l'unité de chiffrage (SE), au moins de manière temporaire, par la routine de sécurité (SIS) activée et
- **en ce que** la fonction sécurisée (FAA) est déclenchée ou continue à s'exécuter à condition que, dans la routine de sécurité (SIS), l'unité de chiffrage (SE) reçoive une information de réponse (ai) ayant subi un chiffrage supplémentaire spécifique à une fonction dans un intervalle de temps prédéfini après chaque envoi de l'information de requête (afi).

2. Procédé selon la revendication 1, **caractérisé en ce que** l'au moins une instruction d'exploitation (amo) est formée dans une application sécurisée (SAPP) prévue dans le dispositif périphérique (PC) ou dans un dispositif d'entrée (EE) du dispositif périphérique (PC).

3. Procédé selon la revendication 1, **caractérisé en ce que**, dans le cas d'une installation de la fonction sécurisée (FAA) liée à l'activation, l'instruction d'exploitation (amo) comprend, en plus, des informations d'exploitation (tf1..n, v1..n) grâce auxquelles des fonctions partielles réalisées selon une technique de programmation dans le système de communication KS sont combinées selon une technique de programmation dans le sens d'une installation de la fonction sécurisée (FAA).

4. Procédé selon la revendication 3, **caractérisé en ce que** les informations d'exploitation supplémentaires (tf1..n, v1..n) formées par l'application sécurisée (SAPP) sont entrées dans un tableau de combinaisons à l'aide duquel les fonctions partielles qui réalisent la fonction sécurisée (FAA) indiquée sont combinées selon une technique de programmation.

5. Procédé selon l'une des revendications précédentes, **caractérisé en ce que** les informations de requête (afi) chiffrées individuelles pour chaque fonction sont transmises périodiquement à l'unité de chiffrage (SE).

6. Procédé selon l'une des revendications précédentes, **caractérisé en ce que** l'intervalle de temps prédéfini est défini en accord avec les temps de traitement et de transmission du système de communication (KS), du dispositif périphérique (PC) et de l'unité de chiffrage (SE).

7. Procédé selon l'une des revendications précédentes, **caractérisé en ce que** les fonctions sécurisées (FAA) sont représentées par des fonctions de commutation sécurisées et par des services complémentaires sécurisés.

8. Procédé selon l'une des revendications précédentes, **caractérisé en ce que**, dans l'unité de chiffrage (SE), les programmes de chiffrage (SM) procédant à la détermination des clés (ARER) spécifiques aux fonctions et à la formation des informations de réponse (ai) peuvent être activés par un dispositif de protection des séquences de programme (DONGLE) exécuté selon la technique des circuits.

9. Procédé selon la revendication 6, **caractérisé en ce que** le dispositif de protection des séquences de programme (DONGLE) exécuté selon la technique des circuits est fiché sur une interface (SST) de l'unité de chiffrage (SE) et **en ce que** l'activation des programmes de chiffrage (SM) est déclenchée par une routine d'interface (SSR) reliée à l'interface (SST).

10. Procédé selon l'une des revendications précédentes, **caractérisé en ce que** le dispositif périphérique (PC) est relié au système de communication (KS) par le biais d'une interface ACL (ACL).

11. Procédé selon l'une des revendications précédentes, **caractérisé en ce que** l'unité de chiffrage (SE) est intégrée dans le dispositif périphérique (PC).
